# EUROPEAN PATENT APPLICATION

(11) **EP 4 852 158 A1**
(43) Date of publication of application: **09.12.2026**
(21) Application number: 26181008.9
(22) Date of filing: 26.05.2026
(51) Int. Cl.: H01M 50/103, H01M 50/474

(54) **ELECTRICITY STORAGE DEVICE AND METHOD FOR MANUFACTURING ELECTRICITY STORAGE DEVICE**

(30) Priority: 02.06.2025 JP 2025091638
(71) Applicant: Prime Planet Energy & Solutions, Inc., Chuo-ku, Tokyo 103-0022 (JP)
(72) Inventor: OSHIMA, Kazuki, Chuo-ku, Tokyo 103-0022 (JP); WAKIMOTO, Ryoichi, Chuo-ku, Tokyo 103-0022 (JP)
(74) Representative: Kuhnen & Wacker Patent- und Rechtsanwaltsbüro PartG mbB

(57) **Abstract**

An electricity storage device (100) disclosed herein includes: a case main body (12); a first lid (14); a second lid (16); an electrode body (20) housed in the case main body (12); a first spacer (50A) disposed between the first lid (14) and the electrode body (20) within the case main body; a second spacer (50B) disposed between the second lid (16) and the electrode body (20) within the case main body; and an electrode body holder (60) covering the electrode body (20) along an inner side surface of the case main body (12). The electrode body holder (60) covers at least part of an outer side surface of the first spacer (50A) and at least part of an outer side surface of the second spacer (50B), and is adhered to each of the first spacer (50A) and the second spacer (50B) on a side surface (60a) opposing to a pair of wide side surfaces of the case main body (12). The electrode body holder (60) includes cuts (80) on an outer side of a portion covering the electrode body (20).

## Description

### BACKGROUND OF THE DISCLOSURE

### 1. Field

The present disclosure relates to an electricity storage device and a method for manufacturing the electricity storage device.

### 2. Background

Conventionally, there has been known an electricity storage device that includes an electrode body that includes a positive electrode and a negative electrode, a case that houses the electrode body, and an insulation member that is disposed between the electrode body and the case. For example, US 2016/0099444 A1 describes a secondary battery that includes an insulation member disposed between a lid of a case and an electrode body.

### SUMMARY

An electrode body holder (also referred to as an insulation film) is disposed between an electrode body and a case to insulate the electrode body and the case. As a result of study, the inventors have found out that, when wrinkles, bends, or the like are produced at a portion of such an electrode body holder covering the electrode body, a confinement load is hardly applied evenly to the electrode body. Furthermore, there is a risk that Li precipitation may occur depending on the degree of the confinement load, and therefore it is required to suppress wrinkles, bends, or the like at the portion of the electrode body holder covering the electrode body.

The present disclosure has been made in light of such a situation, and provides an electricity storage device having more improved safety, and a method for manufacturing this electricity storage device.

An electricity storage device disclosed herein includes: a case main body having a rectangular tubular shape with a rectangular cross section and open ends; a first lid attached to a first opening of the case main body; a second lid attached to a second opening of the case main body; an electrode body housed in the case main body; a first spacer disposed between the first lid and the electrode body within the case main body; a second spacer disposed between the second lid and the electrode body within the case main body; and an electrode body holder covering the electrode body along an inner side surface of the case main body. The case main body of the electricity storage device includes a pair of opposing wide side surfaces and a pair of opposing narrow side surfaces. Lengths of the first spacer and the second spacer in a direction in which the pair of wide side surfaces oppose each other are shorter than a length of the electrode body in the direction in which the pair of wide side surfaces oppose each other. The electrode body holder protrudes from the electrode body in a length direction of the case main body. The electrode body holder covers at least part of an outer side surface of the first spacer and at least part of an outer side surface of the second spacer, and is adhered to each of the first spacer and the second spacer on a side surface opposing to the pair of wide side surfaces of the case main body. The electrode body holder includes a cut on an outer side of a portion covering the electrode body.

Wrinkles, bends, and the like are suppressed at the portion of the electrode body holder covering the electrode body, so that the electricity storage device disclosed herein can suitably suppress Li precipitation. Thus, it is possible to provide the electricity storage device having more improved safety.

Another aspect discloses a method for manufacturing an electricity storage device disclosed herein. The method for manufacturing the electricity storage device disclosed herein is a method for manufacturing an electricity storage device including: a case main body having a rectangular tubular shape with a rectangular cross section and open ends; a first lid attached to a first opening of the case main body; a second lid attached to a second opening of the case main body; an electrode body housed in the case main body; a first spacer disposed between the first lid and the electrode body within the case main body; a second spacer disposed between the second lid and the electrode body within the case main body; and an electrode body holder covering the electrode body along an inner side surface of the case main body. The manufacturing method includes: a step of preparing the case main body; a step of preparing an insert body formed by combining the electrode body, the first spacer, the second spacer, and the electrode body holder; and a step of inserting the insert body into the case main body through the first opening. In the insert body prepared in the preparation step, the electrode body holder covers the electrode body with the first spacer and the second spacer disposed on both sides, protrudes from the electrode body and is adhered to each of the first spacer and the second spacer on the both sides of the electrode body, and the electrode body holder includes a cut on an outer side of a portion covering the electrode body.

According to the above configuration, wrinkles, bends, and the like are suppressed at the portion of the electrode body holder covering the electrode body, so that it is possible to manufacture the electricity storage device having more improved safety.

The above and other elements, features, steps, characteristics and advantages of the present disclosure will become more apparent from the following detailed description of the preferred embodiments with reference to the attached drawings.

### BRIEF DESCRIPTION OF THE DRAWINGS

FIG. 1 is a perspective view schematically illustrating an electricity storage device according to an embodiment;
FIG. 2 is a schematic longitudinal cross-sectional view taken along line II-II in FIG. 1;
FIG. 3 is a schematic view illustrating a configuration of an electrode body;
FIG. 4 is a schematic view illustrating a vicinity of a positive electrode terminal according to the embodiment;
FIG. 5 is a perspective view schematically illustrating a spacer according to the embodiment;
FIG. 6 is a schematic view illustrating a positional relationship between the electrode body and the spacer according to the embodiment;
FIG. 7 is a schematic view for describing a problem;
FIG. 8 is a schematic view illustrating the positional relationship between the electrode body and the spacer according to the embodiment;
FIG. 9 is a schematic view for describing a problem;
FIG. 10 is a schematic view illustrating a wide side surface of an electrode body holder and the spacer according to the embodiment;
FIG. 11 is a schematic view illustrating a narrow side surface of the electrode body holder and the spacer according to the embodiment;
FIG. 12 is a flowchart illustrating a manufacturing method according to the embodiment;
FIG. 13 is a schematic view illustrating a process of preparing a case main body;
FIG. 14 is a schematic view illustrating an insert body;
FIG. 15 is a flowchart illustrating a procedure of preparing the insert body;
FIG. 16 is a schematic view illustrating how the insert body is inserted into the case main body;
FIG. 17 is a diagram according to a first modified example corresponding to FIG. 10; and
FIG. 18 is a diagram according to a second modified example corresponding to FIG. 16.

### DETAILED DESCRIPTION OF THE PREFERRED EMBODIMENTS

Hereinafter, an embodiment of the technique disclosed herein will be described in detail with reference to the drawings. Note that matters that are other than matters particularly mentioned in this description and that are necessary to implement the technique disclosed herein (e.g., a general configuration and a manufacturing process of an electricity storage device) can be grasped as design matters for one of ordinary skill in the art based on a conventional technique in the corresponding field. The technique disclosed herein can be implemented based on contents disclosed in this description and technical common knowledge in the corresponding field. Furthermore, members and portions that exhibit the same function will be assigned the same reference numerals in the following drawings and described.

### <Electricity Storage Device 100>

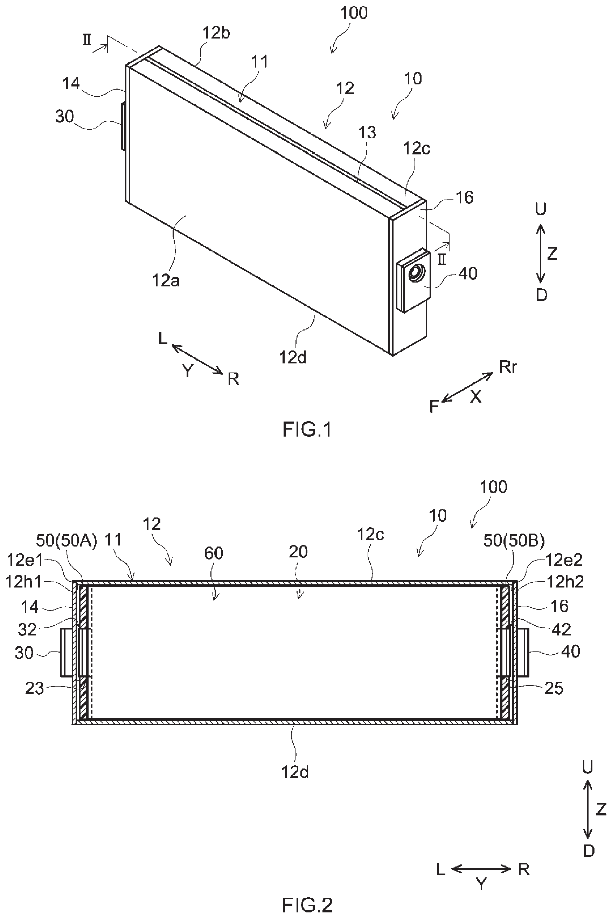

Hereinafter, the embodiment of an electricity storage device disclosed herein will be described. FIG. 1 is a perspective view of the electricity storage device 100. FIG. 2 is a schematic longitudinal cross-sectional view taken along line II-II in FIG. 1. Note that members and portions that exhibit the same function will be assigned the same reference numerals in the following description, and redundant description may be omitted or simplified. Furthermore, symbols F, Rr, L, R, U, and D in the drawings represent front, rear, left, right, upper, and lower, and symbols X, Y, and Z in the drawings represent a lateral direction of the electricity storage device 100, a longitudinal direction orthogonal to the lateral direction, and a height direction orthogonal to the lateral direction and the longitudinal direction, respectively. In this regard, these directions are merely directions for convenience of description, and by no means limit an installation mode of the electricity storage device 100.

As illustrated in FIGS. 1 and 2, the electricity storage device 100 includes a case main body 12, a first lid 14, a second lid 16, an electrode body 20, a first spacer 50A, a second spacer 50B, and an electrode body holder 60. Note that the case main body 12, the first lid 14, and the second lid 16 will be also collectively referred to as a case 10. The electricity storage device 100 is a non-aqueous electrolyte secondary battery here. The electricity storage device 100 is preferably a lithium ion secondary battery. Note that, the "electricity storage device" in this description is a term that refers to devices in general that can be repeatedly charged and discharged, and is a concept that includes secondary batteries such as a lithium ion secondary battery and a nickel hydride battery, and capacitors such as a lithium ion capacitor and a pseudo capacitance capacitor that use chemical reactions.

The case 10 is a housing that houses the electrode body 20 and an electrolyte (not illustrated). As illustrated in FIG. 1, the case 10 has an outer shape of a flat and bottomed cuboid shape (rectangular shape) here. A material of the case 10 may be the same as a material that has been conventionally used, and is not limited in particular. The case 10 is preferably made of a metal, and is more preferably made of, for example, aluminum, an aluminum alloy, iron, an iron alloy.

As illustrated in FIG. 2, the case main body 12 is a member of a rectangular tubular shape whose both ends in a length direction (longitudinal direction Y) are opened and whose cross section is rectangular. The case main body 12 includes a first opening 12h1 at an end part 12e1 (a left end part in FIG. 2) on one side in the longitudinal direction Y. Furthermore, the case main body 12 includes a second opening 12h2 at an end part 12e2 (a right end part in FIG. 2) on the other side. The first opening 12h1 and the second opening 12h2 are formed by short sides of wide side surfaces 12a, 12b and narrow side surfaces 12c,12d. The first opening 12h1 and the second opening 12h2 have substantially rectangular shapes. At least one of the first opening 12h1 and the second opening 12h2 is formed to enable insertion of the electrode body 20 therethrough. Here, the case main body 12 is formed of one metal plate 11. The case main body 12 is formed by bending the one metal plate 11 in the rectangular tubular shape, and bonding (e.g., welding) joints. Here, the case main body 12 includes a welded part 13 on the narrow side surface 12c.

As illustrated in FIG. 1, the case main body 12 includes the pair of wide side surfaces 12a, 12b that oppose e each other, and the pair of opposing narrow side surfaces 12c,12d that oppose each other. The pair of narrow side surfaces 12c,12d continue to the pair of wide side surfaces 12a, 12b. The wide side surfaces 12a, 12b are a pair of plate-like portions that oppose each other in a lateral direction X of the electricity storage device 100 as illustrated in FIG. 1. The wide side surfaces 12a, 12b extend along the longitudinal direction Y of the electricity storage device 100. The narrow side surfaces 12c,12d are a pair of plate-like portions that oppose each other in a height direction Z of the electricity storage device 100 as illustrated in FIG. 1. The narrow side surfaces 12c,12d extend along the longitudinal direction Y of the electricity storage device 100. Note that, in this description, a direction (i.e., the lateral direction X in FIG. 1) in which the pair of wide side surfaces 12a, 12b oppose each other will be also referred to as "a direction in which the wide side surfaces oppose each other". Furthermore, a direction (i.e., the height direction Z in FIG. 1) in which the pair of narrow side surfaces 12c,12d oppose each other will be also referred to as "a direction in which the narrow side surfaces oppose each other".

The "wide side surface" is a surface of the case main body 12 whose area is the largest when the electricity storage device 100 is assembled. The "narrow side surface" is a surface of the case main body 12 whose area is smaller than that of the wide side surface when the electricity storage device 100 is assembled. The wide side surfaces 12a, 12b have larger areas than those of the narrow side surfaces 12c,12d. The wide side surfaces 12a, 12b and the narrow side surfaces 12c,12d have substantially rectangular shapes. The wide side surfaces 12a, 12b and the narrow side surfaces 12c,12d have substantially same dimensions along the longitudinal direction Y. The wide side surfaces 12a, 12b have longer dimensions along the longitudinal direction Y than the dimensions in the height direction Z. The narrow side surfaces 12c,12d have longer dimensions along the longitudinal direction Y than the dimensions in the lateral direction X. Note that the "substantially rectangular shape" in this description is a term that also includes, for example, a shape whose corner part connecting a long side and a short side of a rectangular shape is an R shape, a shape that includes cutouts at corner parts, and the like in addition to a perfect rectangular shape (rectangle shape).

The narrow side surface 12d is a portion that constitutes a bottom surface of the case main body 12 in this embodiment. The wide side surfaces 12a, 12b extend substantially vertically upward (a U direction in FIG. 1) from the narrow side surface 12d. The wide side surface 12a extends from one (a front side in this embodiment) long side of the narrow side surface 12d. The wide side surface 12b extends from the other (a rear side in this embodiment) long side of the narrow side surface 12d. The wide side surface 12a and the wide side surface 12b oppose each other in the lateral direction X. The wide side surfaces 12a, 12b are portions that constitute side surfaces of the case main body 12. In this embodiment, the narrow side surface 12c connects to upper ends of the wide side surfaces 12a, 12b. The narrow side surface 12c is a portion that constitutes a top panel of the case main body 12 in this embodiment. The narrow side surface 12c and the narrow side surface 12d oppose each other in the height direction Z.

The first lid 14 and the second lid 16 have substantially rectangular shapes in plan view as illustrated in FIG. 1. Furthermore, the first lid 14 and the second lid 16 are plate-like members. As illustrated in FIG. 2, the first lid 14 is a member attached to the first opening 12h1 of the case main body 12. The second lid 16 is a member attached to the second opening 12h2 of the case main body 12. The first lid 14 and the second lid 16 are bonded to periphery parts of the openings 12h1 and 12h2 of the case main body 12. The first lid 14 is bonded to the periphery part of the first opening 12h1. The second lid 16 is bonded to the periphery part of the second opening 12h2. The first lid 14 and the second lid 16 bonded to the case main body 12 oppose each other in the longitudinal direction Y. The first lid 14 is provided with a positive electrode terminal 30. The second lid 16 is provided with a negative electrode terminal 40.

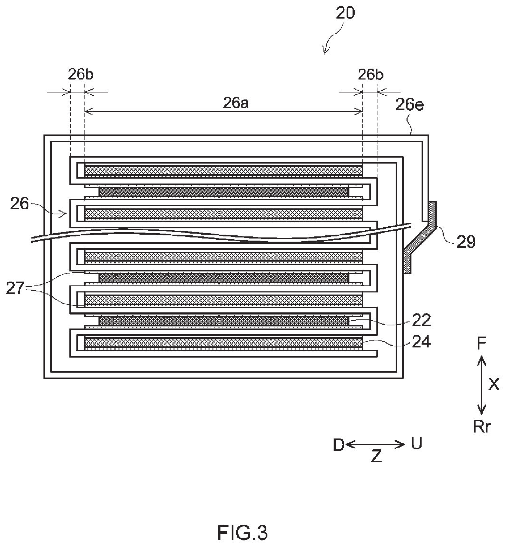

The positive electrode terminal 30 and the negative electrode terminal 40 are respectively connected with a conductive member such as a bus bar outside the case 10. The positive electrode terminal 30 is connected with a positive electrode 22 (see FIG. 3) of the electrode body 20 with a positive electrode current collection terminal 32 interposed therebetween inside the case 10. The negative electrode terminal 40 is connected with a negative electrode 24 (see FIG. 3) of the electrode body 20 with a negative electrode current collection terminal 42 interposed therebetween inside the case 10.

FIG. 3 is a schematic view of the electrode body 20. The electrode body 20 is housed in the case main body 12 (case 10). As illustrated in FIG. 3, the electrode body 20 includes the positive electrode 22, the negative electrode 24, and a separator 26. The electrode body 20 is formed by laminating the positive electrode 22 of a substantially rectangular shape and the negative electrode 24 of a substantially rectangular shape with the separator 26 of a belt shape interposed therebetween. In this embodiment, a lamination direction of the positive electrode 22, the negative electrode 24, and the separator 26 is set to a direction (lateral direction X) in which the wide side surfaces 12a, 12b (see FIG. 1) oppose each other. Note that FIG. 3 schematically illustrates a positional relationship between members constituting the electrode body 20, and do not necessarily reflect actual members.

In this embodiment, the separator 26 has a shape that is alternately folded back at predetermined intervals, that is, a switchback shape (also referred to as a bellows shape.). The separator 26 is alternately folded back at larger intervals than those of the positive electrode 22 and the negative electrode 24 along the height direction Z. The separator 26 includes flat parts 26a and folded parts 26b. The flat part 26a is interposed between the positive electrode 22 and the negative electrode 24. The folded part 26b continues and connects to the flat part 26a.

Note that the configuration of the electrode body 20 is not limited in particular. The electrode body 20 may be a so-called winding electrode body formed by winding a belt-shaped positive electrode and a belt-shaped negative electrode therearound with a separator interposed therebetween. The electrode body 20 may be a so-called lamination electrode body formed by laminating a rectangular positive electrode and a rectangular negative electrode with a separator interposed therebetween. The respective members (such as the positive electrode 22, the negative electrode 24, and the separator 26) constituting the electrode body 20 are not limited in particular.

The positive electrode 22 includes a positive electrode current collection foil, and a positive electrode active material layer formed on at least one surface of the positive electrode current collection foil. For the positive electrode current collection foil, a metal material having predetermined conductivity is used. For the positive electrode current collection foil, a metal foil is used, and, for example, aluminum, an aluminum alloy, or the like may be used. The positive electrode active material layer is a layer including a positive electrode active material. The positive electrode active material is a material that can reversibly occlude and release charge carriers in relation to a negative electrode active material to be described later. The positive electrode active material is not limited in particular. For the positive electrode active material, for example, lithium transition metal composite oxides such as lithium cobalt oxide, lithium manganese oxide, lithium nickel oxide, lithium nickel manganese composite oxide, and lithium nickel cobalt composite oxide. The positive electrode active material layer may include additives such as a binder and a conductive material in addition to the positive electrode active material.

The negative electrode 24 includes a negative electrode current collection foil, and a negative electrode active material layer formed on at least one surface of the negative electrode current collection foil. For the negative electrode current collection foil, a metal material having predetermined conductivity is used. For the negative electrode current collection foil, a metal foil is used, and, for example, copper, a copper alloy, or the like may be used. The negative electrode active material layer is a layer including a negative electrode active material. The negative electrode active material is a material that can reversibly occlude and release charge carriers in relation to the positive electrode active material. The negative electrode active material is not limited in particular. For the negative electrode active material, for example, carbon materials, silicon-based materials, mixed oxides thereof, and the like may be used. For the carbon materials, for example, graphite, hard carbon, soft carbon, amorphous carbon, and the like may be used. For the silicon-based materials, silicon, silicon oxides, and the like may be used. The negative electrode active material layer may include additives such as a binder, a conductive material, and a thickener in addition to the negative electrode active material.

A plurality of fine through-holes that allow charge carriers to pass are formed in the separator 26. The separator 26 may include a base material and a Heat Resistant Layer (HRL) formed on the surface of the base material. As the base material, a porous film made of a resin may be preferably used. As the base material, for example, a porous sheet (film) formed with polyolefin such as polyethylene (PE) and polypropylene (PP), and a resin such as polyamide. The base material may have a single layer structure, or may have a laminated structure of two or more layers. The heat resistant layer may include ceramic particles and binders. The separator 26 may include an adhesive layer 27. The adhesive layer 27 is a layer having good adhesiveness to electrode plates (the positive electrode 22 and the negative electrode 24). The adhesive layer 27 may be formed on the surface of the separator 26. For the adhesive layer 27, a material made of a resin is used, and, for example, a fluorine-based resin and an acrylic-based resin may be used. The adhesive layer 27 may include an inorganic filler or the like.

As illustrated in FIG. 2, the electrode body 20 includes a positive electrode tab 23 and a negative electrode tab 25 that extend toward respectively opposite directions. The positive electrode tab 23 is a portion that extends from an end part on a first side (a left side here) of the electrode body 20 toward the first end part 12e1 of the case main body 12. The positive electrode tab 23 is a portion on which the positive electrode active material layer is not formed, and from which the positive electrode current collection foil is exposed. The positive electrode tab 23 is formed by overlaying a plurality of layers of positive electrode current collection foils protruding toward the first side. The negative electrode tab 25 is a portion that extends from an end part on a second side (a right side here) of the electrode body 20 toward the second end part 12e2 of the case main body 12. The negative electrode tab 25 is a portion on which the negative electrode active material layer is not formed, and from which the negative electrode current collection foil is exposed. The negative electrode tab 25 is formed by overlaying a plurality of layers of negative electrode current collection foils protruding toward the second side (the right side here). The length from a distal end of the positive electrode tab 23 to a distal end of the negative electrode tab 25 may be formed longer than the length in the longitudinal direction Y of the case main body 12.

An electrolyte is typically a non-aqueous electrolyte containing a non-aqueous solvent and an electrolyte salt (supporting salt). One, two, or more types of non-aqueous solvents that are conventionally known to be capable of being used for this type of usage can be used as non-aqueous solvents. Examples of the non-aqueous solvents include organic solvents such as carbonates, ethers, esters, nitriles, sulfones, and lactones. Examples of carbonates include chain carbonates such as dimethyl carbonate (DMC), diethyl carbonate (DEC), and ethyl methyl carbonate (EMC), and cyclic carbonates such as ethylene carbonate (EC) and propylene carbonate (PC). The non-aqueous solvent preferably includes carbonates. Particularly, the non-aqueous solvent preferably includes cyclic carbonates and chain carbonates.

The electrolyte salt is not limited in particular as long as the electrolyte salt includes charge carriers (typically lithium ions), and one, two, or more types of the electrolyte salts that are conventionally known to be capable of being used for this type of usage can be used. Examples of the electrolyte salts include fluorine-containing lithium salts such as LiPF₆ and LiBF₄. The electrolyte salt preferably includes LiPF₆.

Spacers 50 (the first spacer 50A and the second spacer 50B) are disposed in a space between the lids (the first lid 14 and the second lid 16) and the electrode body 20. More specifically, as illustrated in FIG. 2, the first spacer 50A is disposed between the first lid 14 and the electrode body 20 in the case main body 12. The second spacer 50B is disposed between the second lid 16 and the electrode body 20 in the case main body 12. Consequently, it is possible to prevent conduction between the electrode body 20, and the first lid 14 and the second lid 16. Furthermore, the spacer 50 regulates movement of the electrode body 20 in the longitudinal direction Y. Thus, it is possible to prevent the electrode body 20 (e.g., the positive electrode tab 23 and the negative electrode tab 25) from being damaged. Note that a material of the spacer 50 is not limited in particular. For example, the spacer 50 may be formed from a resin material that has resistance and electric insulation against an electrolyte to be used, and can be elastically deformed. Examples of such a resin material include polyolefin-based resins such as polypropylene (PP) and polyethylene (PE), fluorine-based resins such as tetrafluoroethylene-perfluoro alkoxyethylene copolymer (PFE) and polytetrafluoroethylene (PTFE), and polyphenylene sulfide (PPS), and the like

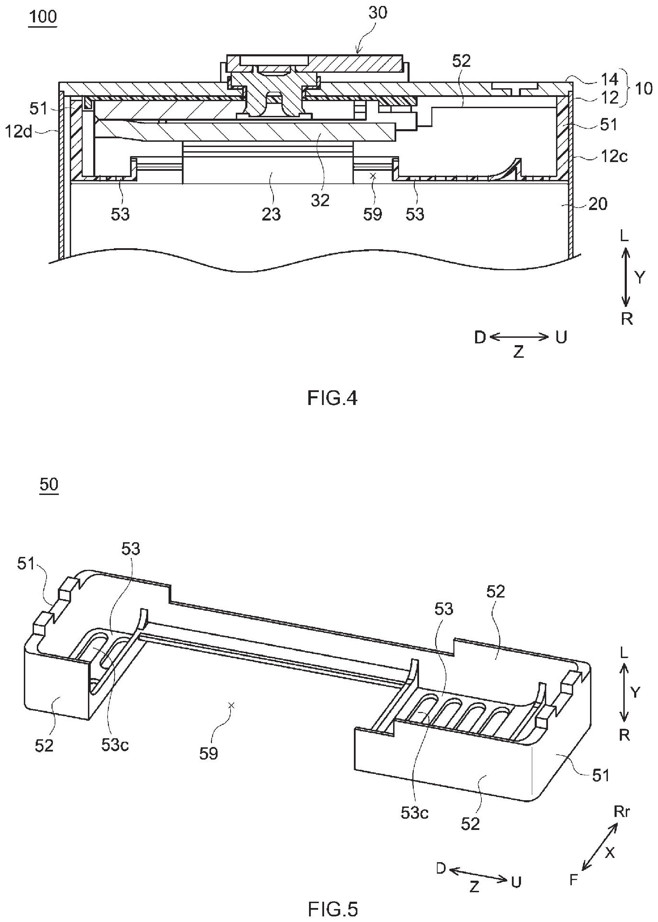

FIG. 4 is a schematic view illustrating a vicinity of the positive electrode terminal 30. FIG. 5 is a perspective view schematically illustrating the spacer 50 according to the embodiment. As illustrated in FIGS. 4 and 5, the spacer 50 includes a pair of first wall parts 51, a pair of second wall parts 52, and partition parts 53. The first wall parts 51 are portions along at least part of the pair of narrow side surfaces 12c,12d of the case main body 12. More specifically, the first wall parts 51 are formed at both end parts of the spacer 50 in a direction (a Z direction in FIG. 4) in which the narrow side surfaces oppose each other. As illustrated in FIG. 4, each of the first wall parts 51 is vertically provided along part of the narrow side surfaces 12c,12d of the case main body 12 and toward one direction (the left end part in FIG. 4) of the longitudinal direction Y. Furthermore, although not illustrated, each of the first wall parts 51 continuously extends along the narrow side surfaces 12c,12d and in a direction of the lateral direction X.

The second wall parts 52 are portions along at least part of the pair of wide side surfaces 12a, 12b of the case main body 12. More specifically, as illustrated in FIG. 5, the second wall parts 52 are formed at the both end parts of the spacer 50 in a direction (an X direction in FIG. 5) in which the wide side surfaces oppose each other. Furthermore, each of the second wall parts 52 is vertically provided along part of the wide side surfaces 12a, 12b of the case main body 12 and toward the one direction (the left end part in FIG. 4) of the longitudinal direction Y. Furthermore, the second wall parts 52 on one side (an Rr side in the X direction here) in the direction in which the wide side surfaces oppose each other continuously extend along the direction in which the narrow side surfaces oppose each other. On the other hand, a space 59 that allows an electrode tab group (the positive electrode tab 23 in FIG. 4) and the like to pass is formed on the other side (an F side in the X direction here) in the direction in which the wide side surfaces oppose each other. Hence, the second wall part 52 on the other side (the F side in the X direction here) in the direction in which the wide side surfaces oppose each other includes a region cut halfway and including a center part in the direction in which the narrow side surfaces oppose each other.

As illustrated in FIG. 4, the partition parts 53 are disposed so as to be interposed between the electrode body 20 and the lid (the first lid 14 here). The partition part 53 is a plate-like member that extends along opposing directions of the narrow side surfaces. The partition part 53 is supported by the first wall part 51 and the second wall part 52. More specifically, the both ends of the partition part 53 in the direction in which the narrow side surfaces oppose each other are connected to the lower end of the first wall part 51. Furthermore, the both ends of the partition part 53 in the direction in which the wide side surfaces oppose each other are connected to the lower end of the second wall part 52. Furthermore, the space 59 is formed in the spacer 50. Hence, the partition part 53 is divided in a region including a center part in the direction in which the narrow side surfaces oppose each other. As illustrated in FIG. 5, here, the spacer 50 includes a plurality of openings 53c that penetrate the partition parts 53. The spacer 50 includes these openings 53c, so that an electrolyte injected from an injection hole into the case 10 is readily supplied to the entire electrode body 20.

The electricity storage device 100 includes the electrode tab (the positive electrode tab 23 in FIG. 4) and the like that form a conduction path between the electrode body 20 and the positive electrode terminal 30. In this case, the space 59 is formed in the first spacer 50A, so that, even when the first spacer 50A is interposed between the first lid 14 and the electrode body 20, it is possible to easily form the conduction path from the electrode body 20 to the positive electrode terminal 30.

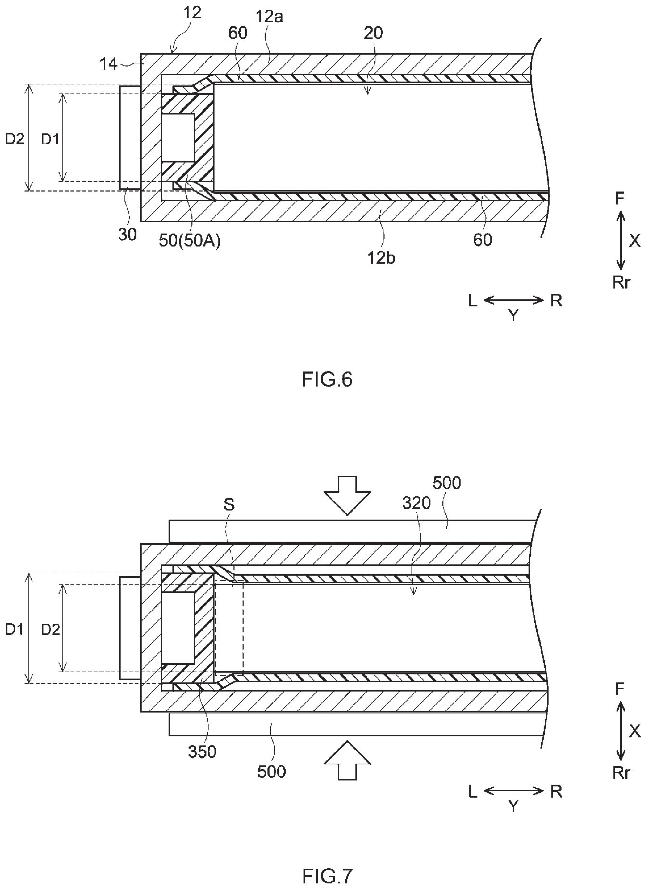

FIG. 6 is a schematic view illustrating a positional relationship between the electrode body 20 and the spacer 50 according to the embodiment. FIG. 7 is a schematic view for describing a problem. Here, the length of the spacer 50 in the direction (the X direction in FIG. 6) in which the wide side surfaces oppose each other will be also referred to as "a thickness D1 of the spacer 50". Furthermore, the length of the electrode body 20 in the direction in which the wide side surfaces oppose each other will be also referred to as "a thickness D2 of the electrode body 20". In the electricity storage device 100 disclosed herein, the lengths of the spacers 50 (the first spacer 50A and the second spacer 50B) in the direction in which the pair of wide side surfaces oppose each other are shorter than the length of the electrode body 20 in the direction in which the pair of wide side surfaces oppose each other. That is, the thicknesses D1 of the spacers 50 (the first spacer 50A and the second spacer 50B) are shorter than the thickness D2 of the electrode body 20.

A result of study by the inventors shows that, when the thickness D1 of a spacer 350 is longer than the thickness D2 of an electrode body 320 (that is, D1 > D2) as illustrated in FIG. 7, the following problem occurs. That is, it has been found out that, when charging and discharging are performed while a load is applied to a confinement plate 500 in an activation process of the electricity storage device 100, a region S to which a confinement load is hardly applied is produced. In the region to which the confinement load is hardly applied, there is a risk that Li precipitation occurs at a time of charging or discharging, and a fire breaks out due to short-circuiting depending on the degree of Li precipitation. Hence, in the electricity storage device 100 disclosed herein, as illustrated in FIG. 6, the thickness D1 of the spacer 50 is set to be shorter than the thickness D2 of the electrode body 20 (i.e., D1 < D2). Consequently, it is possible to suppress Li precipitation at the time of charging or discharging, and implement the electricity storage device 100 having higher safety.

The thickness D1 of the spacer 50 only needs to be set shorter than the thickness D2 of the electrode body 20. That is, "thickness D2 of electrode body 20 > thickness D1 of spacer 50" only needs to hold. A difference between the thickness D1 of the spacer 50 and the thickness D2 of the electrode body 20 is not limited in particular, yet is preferably 3 mm or more, is more preferably 5 mm or more, and is still more preferably 10 mm or more. An upper limit value of the difference between the thickness D1 of the spacer 50 and the thickness D2 of the electrode body 20 is, for example, 20 mm or less. Thus, even when, for example, expansion and contraction of the electrode body 20 occur due to charging or discharging, it is possible to maintain a state where the thickness D1 of the spacer 50 is shorter than the thickness D2 of the electrode body 20. Note that the difference between the thickness D1 of the spacer 50 and the thickness D2 of the electrode body 20 means "thickness D2 of electrode body 20" - "thickness D1 of spacer 50".

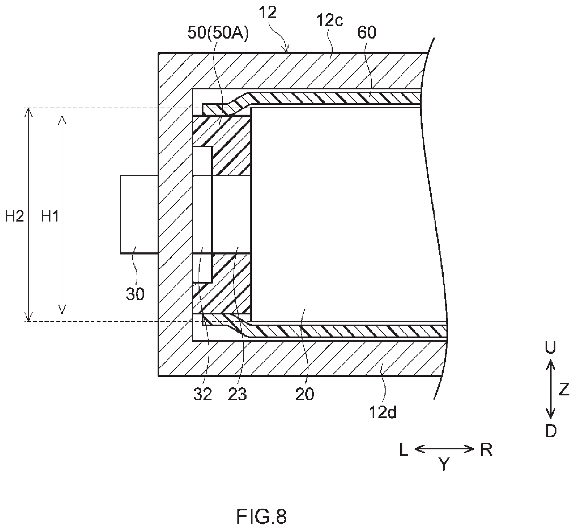

FIG. 8 is a schematic view illustrating a positional relationship between the electrode body 20 and the spacer 50 according to the embodiment. Here, the length of the spacer 50 in the direction (the Z direction in FIG. 8) in which the narrow side surfaces oppose each other will be also referred to as "a height H1 of the spacer 50". Furthermore, the length of the electrode body 20 in the direction in which the narrow side surfaces oppose each other will be also referred to as "a height H2 of the electrode body 20". Although not limited in particular, the height H1 of the spacer 50 is preferably shorter than the height H2 of the electrode body 20. That is, "height H2 of electrode body 20 > height H1 of spacer 50" preferably holds. Since a wide remaining space inside a cell is secured, a rise in a cell internal pressure due to gas production can be suppressed, so that it is possible to design the electricity storage device 100 having high durability. Furthermore, since in an insertion process to be described later, the insert body becomes smaller than the opening of the case main body 12 at a beginning of insertion of the insert body, the insert body is readily inserted, so that productivity improves. For example, the difference between the height H1 of the spacer 50 and the height H2 of the electrode body 20 is not limited in particular, yet is preferably 3 mm or more, is more preferably 5 mm or more, and is still more preferably 10 mm or more. Note that the difference between the height H1 of the spacer 50 and the height H2 of the electrode body 20 means "height H2 of electrode body 20" - "height H1 of spacer 50".

As illustrated in FIG. 2, the electrode body 20 is housed in the case 10 in a state where the electrode body 20 is covered with the electrode body holder 60. The electrode body holder 60 is a film that covers the electrode body 20 along the inner side surface of the case main body 12. The electrode body holder 60 is formed in a tubular shape, The electrode body holder 60 is also referred to as an insulation film. The electrode body holder 60 is an insulation member that covers the electrode body 20, and insulates the electrode body 20 and the case 10 (case main body 12). A material of the electrode body holder 60 may be the same as a material that has been conventionally used, and is not limited in particular. Examples of such a material include polyolefin resins such as polypropylene (PP) and polyethylene (PE), and fluorine-based resins such as perfluoroalkoxy alkane and polytetrafluoroethylene (PTFE).

The thickness of the electrode body holder 60 is preferably, for example, 50 µm or more, and is more preferably 100 µm or more from a viewpoint of strength. The thickness of the electrode body holder 60 is preferably, for example, 250 µm or less, and is more preferably 200 µm or less from a viewpoint of the capacity in the case 10.

The inventors of the present disclosure think that the inventors want to implement the electricity storage device 100 that suitably suppresses Li precipitation and has more improved safety. As described above, when, for example, charging, discharging, or the like is performed while a load is applied to the electrode body 320 by the confinement plate 500, and when the thickness D1 of the spacer 350 is longer than the thickness D2 of the electrode body 320 (see FIG. 7), there has been a risk that unevenness is produced in a confinement pressure, and Li precipitation occurs. Hence, it has been newly found out that the thickness D1 of the spacer 50 needs to be made shorter than the thickness D2 of the electrode body 20, yet, in this case, wrinkles and bends are produced at a portion of the electrode body holder 60 covering the electrode body 20.

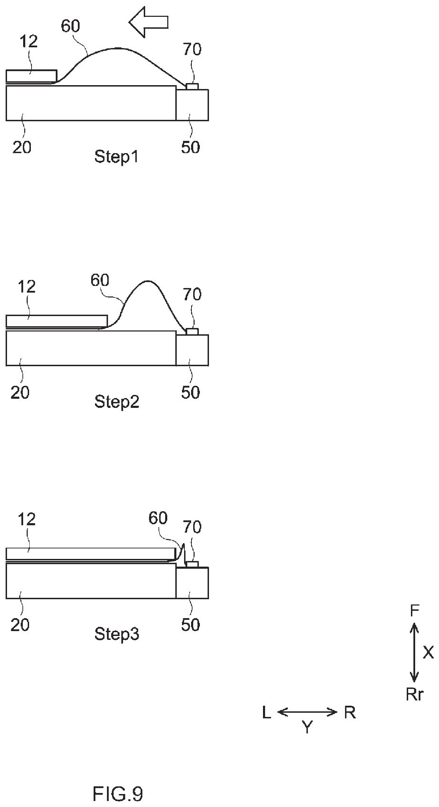

FIG. 9 is a diagram schematically illustrating a cause that such a problem occurs. However, it is sufficient that the electricity storage device 100 disclosed herein can suppress production of wrinkles and bends at a portion of the electrode body holder 60 covering the electrode body 20. That is, description of a mechanism that causes such a problem does not intend limited interpretation in particular. In a case where the thickness D1 of the spacer 50 is shorter than the thickness D2 of the electrode body 20 and the end part of the electrode body holder 60 is adhered to the spacer 50 as illustrated in Step 1 in FIG. 9, if insertion of the case main body 12 is continued as indicated by an arrow in FIG. 9, a remaining portion of the electrode body holder 60 is left. When the insertion is further continued in this state as illustrated in Step 2, the remaining portion starts rising and being folded. Furthermore, as illustrated in Step 3, the remaining portion is folded, and wrinkles, bends, and the like are produced at the portion of the electrode body holder 60 covering the electrode body 20. As described above, if there are wrinkles and bends of the electrode body holder 60 on the electrode body 20, there is a risk that a confinement load is hardly applied evenly, and Li precipitation occurs. Hereinafter, a method for implementing the electricity storage device 100 that suppresses Li precipitation even in the case where the thickness D1 of the spacer 50 is shorter than the thickness D2 of the electrode body 20, and the end part of the electrode body holder 60 is adhered to the spacer 50 will be described in detail.

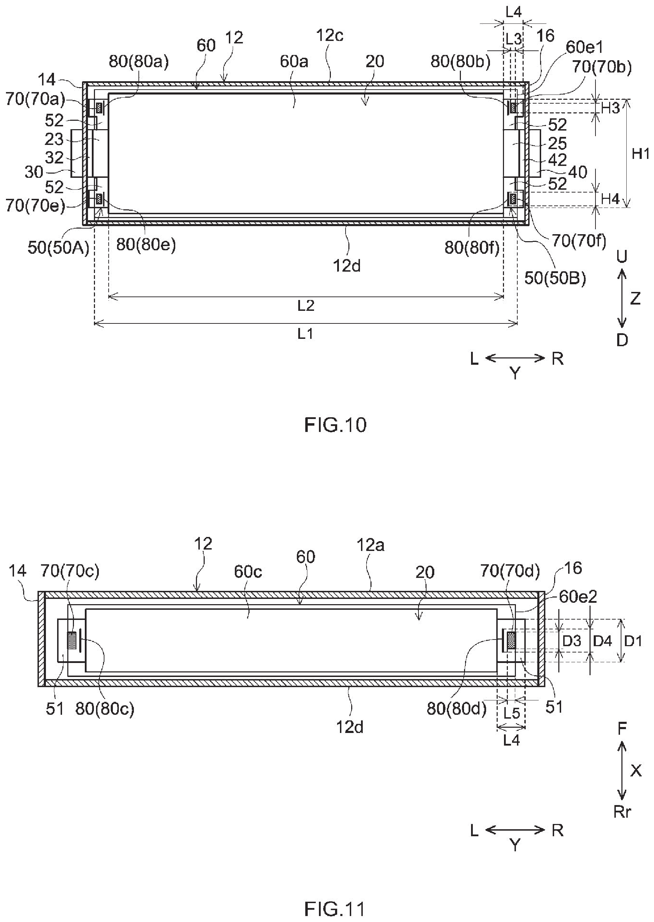

FIG. 10 is a schematic view illustrating the wide side surface of the electrode body holder 60 and the spacer 50 according to the embodiment. Here, the length of the electrode body holder 60 in the length direction (a Y direction in FIG. 10) of the case main body 12 will be also referred to as "a length L1 of the electrode body holder 60". Furthermore, the length of the electrode body 20 in the longitudinal direction Y of the case main body 12 will be also referred to as "a length L2 of the electrode body 20". In the electricity storage device 100 disclosed herein, as illustrated in FIG. 10, the length L1 of the electrode body holder 60 is longer than the length L2 of the electrode body 20. In other words, the electrode body holder 60 protrudes from the electrode body 20 in the longitudinal direction of the case main body 12. Furthermore, the electrode body holder 60 is disposed to cover at least part of the spacers 50 (the first spacer 50A and/or the second spacer 50B). More preferably, the electrode body holder 60 is disposed to cover at least part of the first spacer 50A and at least part of the second spacer 50B. Consequently, it is possible to sufficiently protect the electrode body 20, and more suitably insulate the case 10. Note that "the length L2 of the electrode body 20" is a dimension (length) of the electrode body 20 except the positive electrode tab 23 and the negative electrode tab 25.

Although not limited in particular, the length L1 of the electrode body holder 60 is 10 mm or more longer, is more preferably 15 mm or more longer, and is still more preferably 20 mm or more longer than the length L2 of the electrode body 20. From a viewpoint of the capacity in the case main body 12, the difference between the length L1 of the electrode body holder 60 and the length L2 of the electrode body 20 is preferably 50 mm or less.

In the electricity storage device 100 disclosed herein, as illustrated in FIG. 10, the electrode body holder 60 is adhered to each of the first spacer 50A and the second spacer 50B on a side surface 60a opposing to the wide side surface 12a (more specifically, a side surface opposing to the second wall part 52 of the spacer 50). In other words, the electrode body holder 60 includes at least two adhesion parts 70 (a first adhesion part 70a and a second adhesion part 70b) on the side surface 60a. Consequently, it is possible to integrate, for example, the electrode body 20, the spacer 50, and the electrode body holder 60, and suitably protect the electrode body 20 when the electrode body 20 is inserted into the case main body 12. Note that, although illustration is omitted, the electrode body holder 60 also preferably includes adhesion parts on the side surface opposing to the wide side surface (i.e., wide side surface 12b) on the other side of the case main body 12. Similarly to, for example, the above, the electrode body holder 60 includes at least the two adhesion parts 70 such that the electrode body holder 60 is also adhered to each of the first spacer 50A and the second spacer 50B on the side surface opposing to the wide side surface 12b of the case main body 12.

The electrode body holder 60 and the spacer 50 only need to be suitably adhered, and an adhesion method therefor is not limited in particular. Examples of the adhesion method include ultrasonic bonding, heat sealing, adhesion that uses an adhesive tape, and the like. Above all, ultrasonic bonding is preferable from a viewpoint of manufacturing efficiency and bond strength.

The electrode body holder 60 includes on the side surface 60a the adhesion parts 70 at portions in contact with the second wall part 52 of the spacer 50. The number of the adhesion parts 70 on the side surface 60a of the electrode body holder 60 only needs to be at least two, and may be three or more (e.g., four). Preferably, the electrode body holder 60 only needs to include on the side surface 60a the adhesion parts 70 (the first adhesion part 70a and the second adhesion part 70b) at the both ends in the longitudinal direction Y of the electrode body holder 60.

The size of the adhesion part 70 may be set to such a size that the electrode body holder 60 and the spacer 50 can be suitably adhered. In this regard, although described later in detail, the adhesion parts 70 may cause wrinkles and bends of the electrode body holder 60, and therefore are preferably set to appropriate sizes. Here, the length of the adhesion part 70 in the direction in which the narrow side surfaces oppose each other (the Z direction in FIG. 10) in a case where the adhesion parts 70 are present on the side surface 60a of the electrode body holder 60 will be referred to as "a length H3 in a height direction of the adhesion part 70". The length H3 in the height direction of the adhesion part 70 is preferably 1/10 or less, is more preferably 1/15 or less, and is still more preferably 1/20 or less than the height H1 of the spacer 50. As long as the electrode body holder 60 and the spacer 50 can be suitably adhered, a lower limit value of the length H3 in the height direction of the adhesion part 70 is not limited in particular, and may be, for example, 1/30 or more. More specifically, the length H3 (average length) in the height direction of the adhesion part 70 is preferably 1 mm or more and 30 mm or less, is more preferably 1 mm or more and 20 mm or less, and is still more preferably 1 mm or more and 10 mm or less.

Furthermore, the length in the length direction (the Y direction in FIG. 10) of the adhesion part 70 in a case where the adhesion parts 70 are present on the side surface 60a of the electrode body holder 60 will be referred to as "a length L3 of the adhesion part 70". Furthermore, the length in the longitudinal direction Y of the spacer 50 will be referred to as "a length L4 of the spacer 50". The length L3 of the adhesion part 70 is preferably 4/5 or less, is more preferably 1/2 or less, and is still more preferably 1/3 or less than the length L4 of the spacer 50. A lower limit value of the length L3 of the adhesion part 70 is not limited in particular, and may be, for example, 1/10 or more. More specifically, the length L3 (average length) of the adhesion part 70 is preferably 1 mm or more and 10 mm or less, is more preferably 1 mm or more and 8 mm or less, and is still more preferably 1 mm or more and 5 mm or less. Consequently, it is possible to suppress wrinkles and bends of the electrode body holder 60 to be described later while suitably adhering the electrode body holder 60 and the spacer 50.

FIG. 11 is a schematic view illustrating the narrow side surface of the electrode body holder 60 and the spacer 50 according to the embodiment. Although not limited in particular, as illustrated in FIG. 11, the electrode body holder 60 is preferably adhered to each of the first spacer 50A and the second spacer 50B on a side surface 60c opposing to the narrow side surface 12c (more specifically, a side surface opposing to the first wall part 51 of the spacer 50). In other words, the electrode body holder 60 preferably includes at least the two adhesion parts 70 on the side surface 60c. As illustrated in, for example, FIG. 11, the electrode body holder 60 only needs to include on the side surface 60c the adhesion parts 70 (a third adhesion part 70c and a fourth adhesion part 70d) at the both ends in the longitudinal direction Y. Consequently, for example, position shift of the electrode body holder 60 at a time of insertion is more suitably suppressed. Note that, although illustration is omitted, the electrode body holder 60 also preferably includes the adhesion parts 70 on the narrow side surface on the other side of the case main body 12 (i.e., the side surface opposing to the narrow side surface 12d).

The size of the adhesion part 70 in a case where the adhesion parts 70 are present on the side surface 60c of the electrode body holder 60 may be set to such a size that the electrode body holder 60 and the spacer 50 can be suitably adhered. Here, the length of the adhesion part 70 in the direction in which the wide side surfaces oppose each other (the X direction in FIG. 11) in a case where the adhesion parts 70 are present on the side surface 60c of the electrode body holder 60 will be referred to as "a length D3 in a thickness direction of the adhesion part 70". The length D3 in the thickness direction of the adhesion part 70 is preferably 4/5 or less, is more preferably 1/2 or less, and is still more preferably 1/3 or less than the thickness D1 of the spacer 50. As long as the electrode body holder 60 and the spacer 50 can be suitably adhered, a lower limit value of the length D3 in the thickness direction of the adhesion part 70 is not limited in particular, and may be, for example, 1/5 or more. More specifically, the length D3 (average length) in the thickness direction of the adhesion part 70 is preferably 1 mm or more and 10 mm or less, is more preferably 1 mm or more and 8 mm or less, and is still more preferably 1 mm or more and 5 mm or less.

The length in the length direction (the Y direction in FIG. 11) of the adhesion part 70 in a case where the adhesion parts 70 are present on the side surface 60c of the electrode body holder 60 will be referred to as "a length L5 of the adhesion part 70". The length L5 of the adhesion part 70 is preferably 4/5 or less, is more preferably 1/2 or less, and is still more preferably 1/3 or less than the length L4 of the spacer 50. A lower limit value of the length L5 of the adhesion part 70 is not limited in particular, and may be, for example, 1/5 or more. More specifically, the length L5 (average length) in the longitudinal direction Y of the adhesion part 70 is preferably 1 mm or more and 10 mm or less, is more preferably 1 mm or more and 8 mm or less, and is still more preferably 1 mm or more and 5 mm or less. Consequently, the electrode body holder 60 is also suitably adhered to the spacer 50 on the side surface 60c.

As illustrated in FIG. 10, in the electricity storage device 100 disclosed herein, the electrode body holder 60 includes cuts 80 on an outer side of a portion covering the electrode body 20. Consequently, it is possible to suppress production of wrinkles at the portion of the electrode body holder 60 covering the electrode body 20, and suppress Li precipitation caused by the wrinkles. Accordingly, it is possible to implement the electricity storage device 100 having higher safety. At least the one cut 80 only needs to be present in the outer side of the portion at which the electrode body holder 60 covers the electrode body 20. For example, the cuts 80 are preferably present in the side surface 60a of the electrode body holder 60. The cut 80 preferably has a line shape (linear shape). The cut 80 may be a so-called "slit".

In a case where the cuts 80 are present in the side surface 60a of the electrode body holder 60, the cuts 80 are preferably formed in substantially linear shapes along the direction (the Z direction in FIG. 10) in which the pair of narrow side surfaces oppose each other. Note that the "substantially linear shape" is not limited to a perfect straight line, and means a line that, in a case where a straight line is drawn along an edge part 60e1 in the longitudinal direction of the electrode body holder 60, is hardly shifted from this straight line (e.g., an inclination angle is less than 5° and is preferably less than 4°).

Although not limited in particular, the electricity storage device 100 disclosed herein preferably includes a first cut 80a that is located between the electrode body 20 and a portion to which the first spacer 50A is adhered in the length direction of the case main body 12 (the Y direction in FIG. 10) on the side surface 60a of the electrode body holder 60. In other words, the electricity storage device 100 preferably includes the first cut 80a between the adhesion part 70 (the first adhesion part 70a in FIG. 10) and the electrode body 20 in the longitudinal direction Y. Alternatively, the electricity storage device 100 disclosed herein preferably includes a second cut 80b that is located between the electrode body 20 and a portion to which the second spacer 50B is adhered in the longitudinal direction Y of the case main body 12 on the side surface 60a of the electrode body holder 60. That is, the electricity storage device 100 preferably includes the second cut 80b between the adhesion part 70 (the second adhesion part 70b in FIG. 10) and the electrode body 20 in the longitudinal direction Y.

Note that, although illustration is omitted, the electrode body holder 60 also preferably includes the cuts 80 on the side surface opposing to the wide side surface (i.e., wide side surface 12b) on the other side of the case main body 12. Similarly to, for example, the above, the electrode body holder 60 also preferably includes cuts located between the electrode body 20 and the portion, to which the first spacer 50A is adhered, on the side surface opposing to the wide side surface 12b of the case main body 12. Furthermore, the electricity storage device 100 preferably includes cuts located between the electrode body 20 and the portion to which the second spacer 50B is adhered.

In the electricity storage device 100 disclosed herein, the electrode body holder 60 preferably includes both of the first cut 80a and the second cut 80b. Consequently, it is possible to more suitably suppress production of wrinkles and bends at the portion covering the electrode body 20.

Although not limited in particular, in the electricity storage device 100 disclosed herein, as illustrated in FIG. 10, the first cut 80a and the second cut 80b are preferably disposed at positions at which the first cut 80a and the second cut 80b do not overlap the electrode tabs (the positive electrode tab 23 and the negative electrode tab 25) in the direction (the Z direction in FIG. 10) in which the pair of narrow side surfaces of the case main body 12 oppose each other. According to such a configuration, the electrode tabs are protected at the portions without cuts of the electrode body holder 60, so that it is possible to further reduce a risk of short-circuiting.

Here, the length of the cut 80 in the direction (the Z direction in FIG. 10) in which the narrow side surfaces oppose each other will be referred to as "a height H4 in the height direction of the cut 80". As illustrated in FIG. 10, in the electricity storage device 100 disclosed herein, the height H4 in the height direction of the cut 80 is preferably longer than the length H3 in the height direction of the adhesion part 70. More specifically, the lengths in the height direction of the first cut 80a and the second cut 80b are preferably longer than the lengths in the height direction of the first adhesion part 70a and the second adhesion part 70b. The length H4 in the height direction of the cut 80 is set longer than the length H3 in the height direction of the adhesion part 70, so that an effect of suppressing wrinkles and bends of the electrode body holder 60 is more suitably exhibited.

In a case where the cuts 80 are present in the side surface 60a of the electrode body holder 60, the length H4 in the height direction of the cut 80 is preferably 1.5 times or more, is more preferably 2 times or more, and is still more preferably 3 times or more than, for example, the height H3 in the height direction of the adhesion part 70. Consequently, the effect of suppressing wrinkles and bends of the electrode body holder 60 is suitably exhibited. On the other hand, the height H4 in the height direction of the cut 80 is preferably substantially the same length as at least the length H3 in the height direction of the adhesion part 70 (i.e., H3 = H4). More specifically, the length H4 (average length) in the height direction of the cut 80 is preferably 3 mm or more and 90 mm or less, is more preferably 5 mm or more and 50 mm or less, and is still more preferably 5 mm or more and 25 mm or less.

Although not limited in particular, as illustrated in FIG. 11, in a case where the electrode body holder 60 includes the adhesion parts 70 on the side surface 60c, the electrode body holder 60 preferably includes the cuts 80 between the adhesion part 70 and the electrode body 20 in the length direction (the Y direction in FIG. 11) of the case main body 12. In a case where, for example, the electrode body holder 60 includes the third adhesion part 70c, the electrode body holder 60 preferably includes a third cut 80c between the third adhesion part 70c and the electrode body 20 in the longitudinal direction Y of the case main body 12. Furthermore, in a case where the electrode body holder 60 includes the fourth adhesion part 70d, the electrode body holder 60 preferably includes a fourth cut 80d between the fourth adhesion part 70d and the electrode body 20 in the longitudinal direction Y of the case main body 12. In a case where the electrode body holder 60 includes both of the third adhesion part 70c and the fourth adhesion part 70d on the side surface 60c, the electrode body holder 60 preferably includes both of the third cut 80c and the fourth cut 80d. Consequently, it is possible to suppress production of wrinkles and bends at the portion at which the electrode body holder 60 covers the electrode body 20 while suitably adhering the electrode body holder 60 and the spacer 50. In this regard, the side surface 60c side of the electrode body holder 60 is not generally applied a confinement load. Consequently, even when wrinkles and the like are produced at the portion that is on the side surface 60c side of the electrode body holder 60 and covers the electrode body 20, there is little risk that short-circuiting or the like occurs. Accordingly, even in the case where the electrode body holder 60 includes the adhesion parts 70 on the side surface 60c, the electrode body holder 60 does not necessarily need to include the cuts 80.

In a case where the cuts 80 are present in the side surface 60c of the electrode body holder 60, the cuts 80 are preferably formed in substantially linear shapes along the direction (the X direction in FIG. 11) in which the pair of wide side surfaces oppose each other. Note that the "substantially linear shape" is not limited to a perfect straight line, and means a line that, in a case where a straight line is drawn along an edge part 60e2 in the longitudinal direction of the electrode body holder 60, is hardly shifted from this straight line (e.g., an inclination angle is less than 5° and is preferably less than 4°).

Here, the length of the cut 80 in the direction (the X direction in FIG. 11) in which the wide side surfaces oppose each other will be referred to as "a length D4 in the thickness direction of the cut 80". As illustrated in FIG. 11, in the electricity storage device 100 disclosed herein, the length D4 in the thickness direction of the cut 80 is preferably longer than the length D3 in the thickness direction of the adhesion part 70. More specifically, the lengths in the thickness direction of the third cut 80c and the fourth cut 80d are preferably longer than the lengths in the thickness direction of the third adhesion part 70c and the fourth adhesion part 70d. The length D4 in the thickness direction of the cut 80 is set longer than the length D3 in the thickness direction of the adhesion part 70, so that the effect of suppressing wrinkles and bends of the electrode body holder 60 is more suitably exhibited.

In a case where the cuts 80 are present in the side surface 60c of the electrode body holder 60, the length D4 in the thickness direction of the cut 80 is, for example, preferably 1.5 times or more, is more preferably 2 times or more, and is still more preferably 3 times or more than, for example, the length D3 in the thickness direction of the adhesion part 70. Consequently, the effect of suppressing wrinkles and bends of the electrode body holder 60 is suitably exhibited. On the other hand, the length D4 in the thickness direction of the cut 80 is preferably substantially the same length as at least the length D3 in the thickness direction of the adhesion part 70 (i.e., D3 = D4). More specifically, the length D4 (average length) in the thickness direction of the cut 80 is preferably 3 mm or more and 30 mm or less, is more preferably 5 mm or more and 20 mm or less, and is still more preferably 5 mm or more and 15 mm or less.

Although not limited in particular, from a viewpoint of more suitably adhering the electrode body holder 60 and the spacer 50, as illustrated in FIG. 10, the electrode body holder 60 may include the adhesion parts 70 (the first adhesion part 70a, the second adhesion part 70b, a fifth adhesion part 70e, and a sixth adhesion part 70f) at four corners in plan view of the side surface 60a. In this case, the electrode body holder 60 preferably includes a fifth cut 80e located between the fifth adhesion part 70e and the electrode body 20 in the longitudinal direction Y of the case main body 12. Furthermore, the electrode body holder 60 preferably includes a sixth cut 80f located between the sixth adhesion part 70f and the electrode body 20 in the longitudinal direction Y of the case main body 12. Consequently, it is possible to suppress production of wrinkles at the portion of the electrode body holder 60 covering the electrode body 20 while suitably adhering the electrode body holder 60 and the spacer 50. Note that, although illustration is omitted, the electrode body holder 60 may also include the adhesion parts 70 at four corners in plan view on the side surface opposing to the wide side surface (i.e., wide side surface 12b) on the other side of the case main body 12. In this case, the electrode body holder 60 preferably includes a cut between each adhesion part and the electrode body 20.

Although illustration is omitted, the electrode body holder 60 may also include the adhesion parts 70 on the side surface opposing to the narrow side surface (i.e., narrow side surface 12d) on the other side of the case main body 12. For example, the electrode body holder 60 preferably includes the adhesion parts 70 at portions in contact with the second wall part 52 of the spacer 50. Even in this case, as described above, the electrode body holder 60 preferably includes the cut 80 between each adhesion part 70 and the electrode body 20.

### <Method For Manufacturing Electricity Storage Device 100>

The above electricity storage device 100 can be manufactured by a manufacturing method including the following processes: a process of preparing the case main body 12; a process of preparing an insert body formed by combining the electrode body 20, the first spacer 50A, the second spacer 50B, and the electrode body holder 60; and a process of inserting the insert body into the case main body 12 through the opening of the case main body 12. The manufacturing method disclosed herein is characterized by that, in process of preparing the insert body, the electrode body holder 60 covers the electrode body 20 with the first spacer 50A and the second spacer 50B disposed on the both sides, the electrode body holder 60 protrudes from the electrode body 20 and is adhered to each of the first spacer 50A and the second spacer 50B on the both sides of the electrode body 20, and the electrode body holder 60 includes the cuts 80 on the outer side of the portion covering the electrode body 20, and the other manufacturing processes may be the same as those of the conventional technique.

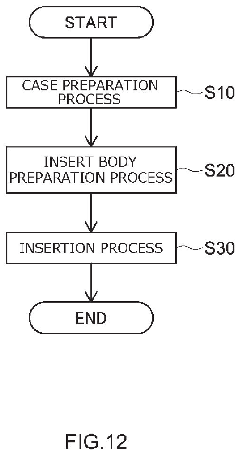

FIG. 12 is a flowchart illustrating a manufacturing method according to the embodiment. The manufacturing method in FIG. 12 includes case preparation process S10, insert body preparation process S20, and insertion process S30 in this order. In this regard, the manufacturing method disclosed herein may further include other processes at arbitrary stages. The manufacturing method disclosed herein may further include, for example, an injection process, an activation process, and an aging process after insertion process S30. Hereinafter, each process will be more specifically described.

In case preparation process S10, the above-described case main body 12 is prepared. More specifically, the case main body 12 of the rectangular tubular shape whose both ends in the longitudinal direction are opened and whose cross section is rectangular is prepared. Although not limited in particular, for example, the case main body 12 is created by preparing the one metal plate 11 and bending and welding the metal plate 11. As the metal plate 11, for example, a board material made of iron, an iron alloy such as stainless steel, aluminum, an aluminum alloy, or the like only needs to be prepared.

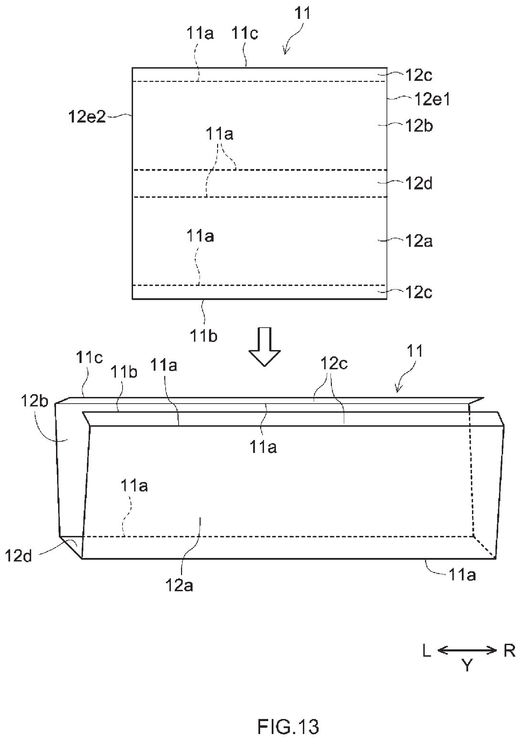

FIG. 13 is a schematic view illustrating a process of preparing the case main body 12. As illustrated in FIG. 13, in the metal plate 11, positions of bending positions 11a are adjusted such that the narrow side surface 12c, the wide side surface 12b, the narrow side surface 12d, the wide side surface 12a, and the narrow side surface 12c are aligned in this order in a direction orthogonal to the longitudinal direction Y. The narrow side surface 12c is divided into two in the metal plate 11. In other words, in the metal plate 11, portions that are the narrow side surface 12c are provided at the both end parts of the metal plate 11.

As for the metal plate 11, the metal plate 11 is bent along the bending positions 11a. The metal plate 11 is bent at the bending positions 11a such that an angle formed by the wide side surfaces 12a, 12b and the narrow side surfaces 12c,12d is approximately 90 degrees. Furthermore, end parts 11b and 11c of the bent metal plate 11 are bonded by welding. Here, part in a circumferential direction of the case main body 12 of the tubular shape is welded along a direction (longitudinal direction Y) connecting the end parts 12e1 and 12e2 on the first side and the second side. Thus, it is possible to form the case main body 12 in the tubular shape. Note that the case main body 12 may be prepared by purchasing a commercially available product.

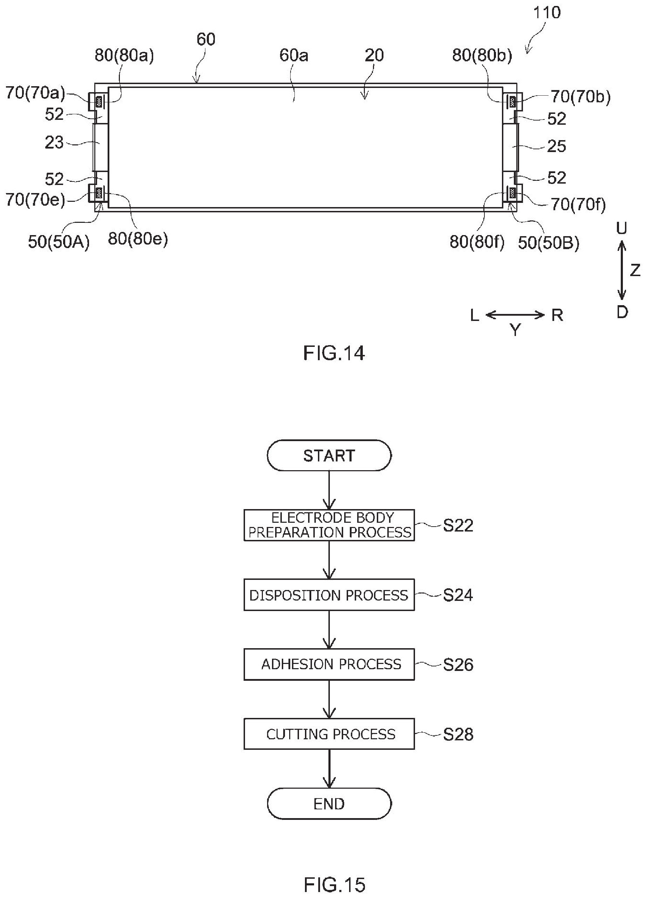

FIG. 14 is a diagram schematically illustrating an insert body 110. As illustrated in FIG. 14, in insert body preparation process S20, a member (hereinafter, also referred to as the insert body 110) in which the electrode body 20 with the first spacer 50A and the second spacer 50B disposed on the both sides is covered with the electrode body holder 60 is prepared.

FIG. 15 is a flowchart illustrating a procedure of preparing the insert body 110. As illustrated in FIG. 15, process S20 of preparing the insert body 110 may include electrode body preparation process S22, disposition process S24, adhesion process S26, and cutting process S28. Note that the order of electrode body preparation process S22, disposition process S24, adhesion process S26, and cutting process S28 is not limited to an order illustrated in FIG. 15, and may be executed simultaneously or in a different order.

In electrode body preparation process S22, the electrode body 20 illustrated in FIG. 3 is prepared. The electrode body 20 may be a lamination-type electrode body as illustrated in FIG. 3, or may be a winding-type electrode body. In one example, the positive electrode 22, the negative electrode 24, and the separator 26 constituting the electrode body 20 may be laminated in, for example, the following order. The separator 26 is folded back and overlaid on the negative electrode 24. The positive electrode 22 is overlaid on the separator 26 overlaid on the negative electrode 24. The separator 26 is folded back and overlaid on the positive electrode 22. The negative electrode 24 is overlaid on the separator 26 overlaid on the positive electrode 22. The above operation is repeated to sequentially laminate the positive electrode 22, the negative electrode 24, and the separator 26. After lamination of the positive electrode 22, the negative electrode 24, and the separator 26 is finished, the separator 26 may be wound, and a termination part 26e may be taped using a tape 29. Note that the length from the distal end of the positive electrode tab 23 of the electrode body 20 created in this case to the distal end of the negative electrode tab 25 may be longer than the length in the longitudinal direction Y of the case main body 12.

Disposition process S24 is a process of appropriately disposing the electrode body holder 60 with respect to the above prepared electrode body 20, and covering the electrode body 20 with the electrode body holder 60. According to the manufacturing method disclosed herein, the electrode body 20 and the spacer 50 are collectively covered with the electrode body holder 60. The electrode body holder 60 may be manually disposed around the electrode body 20, or may be disposed using a machine.

As illustrated in FIG. 14, the electrode body holder 60 is disposed protruding from the electrode body 20 on the both sides in the longitudinal direction Y of the electrode body 20. Although not limited in particular, the electrode body holder 60 only needs to protrude approximately 5 mm to 15 mm from the electrode body 20 except the positive electrode tab 23 and the negative electrode tab 25 in the longitudinal direction Y. Note that the positive electrode tab 23 and the negative electrode tab 25 protrude outward from the electrode body holder 60 in the longitudinal direction Y.

In adhesion process S26, the above disposed electrode body holder 60 and spacer 50 are adhered. An adhesion method is not limited in particular as long as the electrode body holder 60 and the spacer 50 are suitably adhered. Examples of the adhesion method include ultrasonic bonding, heat sealing, adhesion that uses an adhesive tape, and the like. A method for adhering the electrode body holder 60 and the spacer 50 by ultrasonic bonding will be described as an example. Although illustration is omitted, the electrode body holder 60 and the spacer 50 are sandwiched between a horn that is a vibrator of an ultrasonic bonding device and an anvil that is a support member. Next, the horn is brought into contact with the electrode body holder 60. Furthermore, the horn is pressurized by a predetermined pressing load to apply ultrasonic vibration and perform bonding. Consequently, it is possible to suitably adhere the electrode body holder 60 and the spacer 50. Note that the spacer 50 may be fixed by a configuration provided with a jig that sandwiches and fixes the spacer 50 in a Z axis direction in a state where there is no anvil as the above support member.

Although not limited in particular, according to the method for manufacturing the electricity storage device 100 disclosed herein, adhesion process S26 preferably includes a first adhesion process to a fourth adhesion process. For example, adhesion process S26 includes the first adhesion process of adhering the electrode body holder 60 to a side surface (i.e., second wall part 52) of the first spacer 50A to which the wide side surface 12a of the case main body 12 opposes, and the second adhesion process of adhering the electrode body holder 60 to a side surface of the second spacer 50B to which the wide side surface 12b of the case main body 12 opposes. Consequently, it is possible to suitably adhere the spacer 50 and the electrode body holder 60, and suppress shift of the electrode body holder 60 in subsequent processes. Note that the first adhesion process may include adhering the electrode body holder 60 to the side surface of the first spacer 50A to which the wide side surface (i.e., wide side surface 12b) on the other side of the case main body 12 opposes. Furthermore, the second adhesion process may include adhering the electrode body holder 60 to the side surface of the second spacer 50B to which the wide side surface 12b of the case main body 12 opposes.

Furthermore, adhesion process S26 includes the third adhesion process of adhering the electrode body holder 60 to a side surface of the first spacer 50A to which the narrow side surface 12c of the case main body 12 opposes, and the fourth adhesion process of adhering the electrode body holder 60 to a side surface (i.e., first wall part 51) of the second spacer 50B to which the narrow side surface 12c of the case main body 12 opposes. Consequently, it is possible to more suitably adhere the spacer 50 and the electrode body holder 60. Note that the third adhesion process may include adhering the electrode body holder 60 to the side surface of the first spacer 50A to which the narrow side surface (i.e., narrow side surface 12d) on the other side of the case main body 12 opposes. Furthermore, the fourth adhesion process may include adhering the electrode body holder 60 to the side surface of the second spacer 50B to which the narrow side surface 12c of the case main body 12 opposes.

In cutting process S28, cuts are formed in the electrode body holder 60 adhered to the above spacer 50. A method for forming the cuts is not limited in particular, and only needs to be performed by, for example, cutting using a blade at a time of assembly to the electrode body holder 60, or cutting using a cutter blade, an ultrasonic cutter, or the like in a state where a tension is applied. Note that, although the cuts are formed after the electrode body holder 60 and the spacer 50 are adhered here, for example, the cuts may be formed in the electrode body holder 60 before disposition process S24.

Cutting process S28 is preferably performed to form at least the one cut on the outer side of the portion of the electrode body holder 60 covering the electrode body 20. Cutting process S28 preferably includes, for example, a first cutting process of forming the first cut 80a formed in the above first adhesion process and located between the first adhesion part 70a and the electrode body 20 in the longitudinal direction (the Y direction in FIG. 14) of the electrode body holder 60. Alternatively, cutting process S28 preferably includes a second cutting process of forming the second cut 80b formed in the above second adhesion process and located between the second adhesion part 70b and the electrode body 20 in the longitudinal direction Y of the electrode body holder 60. More preferably, both of the first cutting process and the second cutting process may be performed such that the first cut 80a and the second cut 80b are formed (i.e., such that cuts at two portions in total are formed in the side surface 60a of the electrode body holder 60).

Although not limited in particular, cutting process S28 preferably includes a third cutting process of forming the third cut 80c formed in the above third adhesion process and located between the third adhesion part 70c and the electrode body 20 in the length direction (the Y direction in FIG. 10) of the electrode body holder 60. Alternatively, cutting process S28 preferably includes a fourth cutting process of forming the fourth cut 80d formed in the above fourth adhesion process and located between the fourth adhesion part 70d and the electrode body 20 in the length direction of the electrode body holder 60. More preferably, both of the third cutting process and the fourth cutting process may be performed such that the third cut 80c and the fourth cut 80d are formed.

Furthermore, in cutting process S28, the cuts 80 are preferably formed at positions at which the cuts 80 do not overlap the electrode tabs (the positive electrode tab 23 and the negative electrode tab 25) in the direction in which the pair of narrow side surfaces oppose each other. Consequently, the electrode tabs are protected at the portions without the cuts of the electrode body holder 60, so that it is possible to further reduce a risk of short-circuiting.

As result of the above, it is possible to prepare the insert body 110 in which, as illustrated in FIG. 14, the electrode body holder 60 covers the electrode body 20 with the first spacer 50A and the second spacer 50B disposed on the both sides, the electrode body holder 60 protrudes from the electrode body 20 and is adhered to each of the first spacer 50A and the second spacer 50B on the both sides of the electrode body 20, and the electrode body holder 60 includes the cuts 80 on the outer side of the portion covering the electrode body 20.

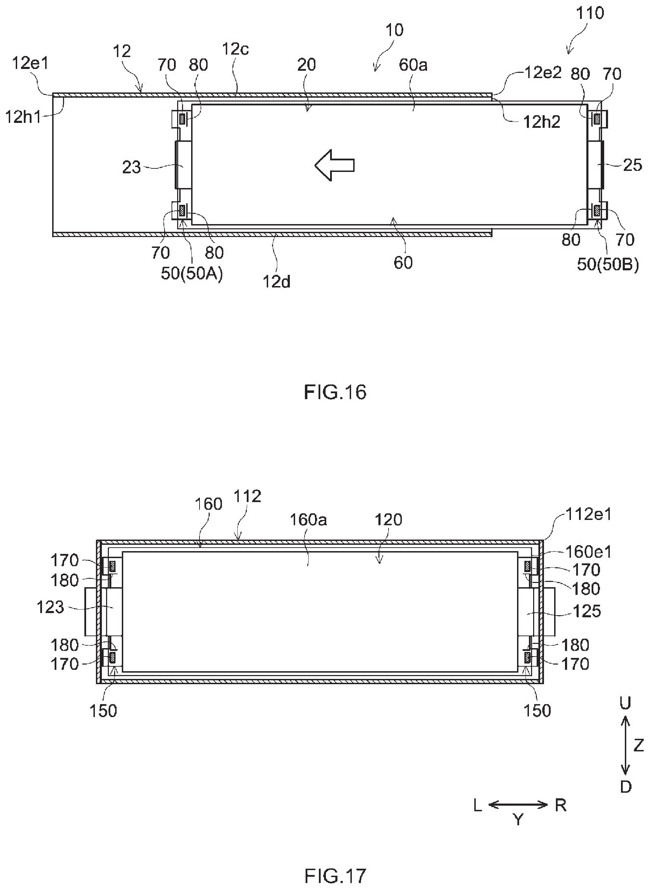

FIG. 16 is a diagram schematically illustrating how the insert body 110 is inserted into the case main body 12. As illustrated in FIG. 16, in insertion process S30, the above prepared insert body 110 is inserted into the case main body 12. More specifically, the insert body 110 is inserted from one opening (the second opening 12h2 here) of the case main body 12 to the other opening (the first opening 12h1 here). At this time, the insert body 110 may be inserted from the positive electrode tab 23 side, or may be inserted from the negative electrode tab 25 side.

As described above, the electrode body holder 60 covering the electrode body 20 includes the adhesion parts 70 and the cuts 80. Hence, even when insertion process S30 is performed, it is possible to suppress production of wrinkles and bends at a portion of the electrode body holder 60 covering the electrode body 20. Thus, it is possible to manufacture the electricity storage device 100 having more improved safety.

A process of sealing the openings (the first opening 12h1 and the second opening 12h2) of the case main body 12 after inserting the insert body 110 into the case main body 12 is performed. For example, the first lid 14 and the second lid 16 block the openings 12h1 and 12h2 of the case main body 12. Although illustration is omitted, the positive electrode tab 23 protruding from the first opening 12h1 of the case main body 12 is connected with the positive electrode current collection terminal 32. The negative electrode tab 25 protruding from the second opening 12h2 of the case main body 12 is connected with the negative electrode current collection terminal 42. The positive electrode current collection terminal 32 is connected to the positive electrode terminal 30 of the first lid 14, and the negative electrode current collection terminal 42 is connected to the negative electrode terminal 40 of the second lid 16. Thereafter, while the positive electrode tab 23 and the negative electrode tab 25 are bent, the first lid 14 and the second lid 16 are welded to the periphery parts of the first opening 12h1 and the second opening 12h2. Thus, the first opening 12h1 and the second opening 12h2 of the case main body 12 are blocked by the first lid 14 and the second lid 16.

After the case 10 is sealed, an electrolyte is injected through an unillustrated injection hole, and the injection hole is sealed. After injection, processing such as initial charging and aging is performed to make the electricity storage device 100.

### <Usage of Electricity Storage Device 100>

The electricity storage device 100 is available for various usages, yet is excellent in higher safety, so that the electricity storage device 100 can be suitably used as, for example, a motor power source (driving power supply) to be mounted on vehicles such as passenger cars and tracks. Although vehicle types are not limited in particular, examples of vehicle types include a Plug-in Hybrid Electric Vehicle (PHEV), a Hybrid Electric Vehicle (HEV), a Battery Electric Vehicle (BEV), and the like.

Although the embodiment of the present disclosure has been described above, the above embodiment is merely an example. The present disclosure can be implemented as other various aspects. The present disclosure can be implemented based on contents disclosed in this description and technical common knowledge in the corresponding field. The technique described in the claims include embodiments obtained by modifying and altering the above exemplified embodiment. For example, part of the above embodiment can be also replaced with the other modified aspects, and the other modified aspects can be also added to the above embodiment. Furthermore, the technical features that are not described as indispensable can be deleted as appropriate.

### <First Modified Example>

In the above first embodiment, in a case where, for example, the cuts 80 are present in the side surface 60a of the electrode body holder 60 as illustrated in FIG. 10, the cuts 80 are formed along the direction (the Z direction in FIG. 10) in which the pair of narrow side surfaces oppose each other. However, since it is sufficient that the cuts are formed such that wrinkles, bends, and the like are not produced at the portion of the above-described electrode body holder 60 covering the electrode body 20, a direction in which the cuts are formed is not limited. FIG. 17 is a diagram according to the first modified example corresponding to FIG. 10. As illustrated in FIG. 17, an electrode body holder 160 according to the first modified example includes cuts 180 whose cutting directions are different. That is, in the first modified example, the cuts 180 are formed along the longitudinal direction (the Y direction in FIG. 17) of a case main body 112. In the first modified example, the electrode body holder 160 includes these cuts 180, so that it is possible to suppress production of wrinkles, bends, and the like at a portion at which the electrode body holder 160 covers an electrode body 120 in, for example, insertion process S30.

In the first modified example, the electrode body holder 160 and a spacer 150 are adhered at adhesion parts 170. In the first modified example, the electrode body holder 160 only needs to include the cuts 180 on an outer side of the portion covering the electrode body 120. As illustrated in, for example, FIG. 17, the electrode body holder 160 may include the cuts 180 closer to a right end part side 112e1 of the case main body 112 than the electrode body 120, and closer to the electrode body 120 side than a right end part 160e1 of the electrode body holder 160 in the longitudinal direction Y of the case main body 112. That is, the cuts 180 may be formed along the longitudinal direction of the adhesion parts 170. Alternatively, cuts may be formed on the outer side of the portion covering the electrode body 120, and from a center part side of the longitudinal direction Y to one end part (e.g., right end part side 112e1).

In the first modified example, the length of the cut 180 along the longitudinal direction Y is preferably longer than the length of the adhesion part 170 along the longitudinal direction Y. Thus, even if the adhesion parts 170 are formed, it is possible to suitably suppress production of wrinkles, bends, and the like at the portion at which the electrode body holder 160 covers the electrode body 120.

In the first modified example, the cuts 180 are preferably formed on a side surface 160a of the electrode body holder 160 opposing to a wide side surface of the case main body 112. Furthermore, in the first modified example, positions at which the cuts 180 are formed are preferably arranged at positions that do not overlap the electrode tabs (a positive electrode tab 123 and a negative electrode tab 125) in the direction in which the pair of narrow side surfaces of the case main body 112 oppose each other. According to such a configuration, the electrode tabs are protected at the portions without cuts of the electrode body holder 160, so that it is possible to further reduce a risk of short-circuiting.

### <Second Modified Example>

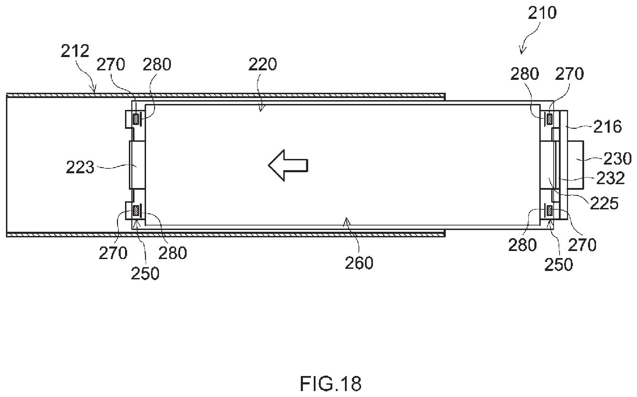

For example, in the above first embodiment, as illustrated in FIGS. 14 and 16, the insert body 110 before insertion process S30 is the component formed by integrating the electrode body 20, the spacer 50, and the electrode body holder 60. However, the configuration of the insert body 110 is not limited thereto. FIG. 18 is a diagram according to the second modified example corresponding to FIG. 16. As illustrated in FIG. 18, in an insert body 210 according to the second modified example, one electrode tab (a negative electrode tab 225 here) of an electrode body 220 and one lid (a second lid 216 here) are connected before insertion process S30. That is, the insert body 210 according to the second modified example is a component formed by integrating the electrode body 220, a spacer 250, an electrode body holder 260, the second lid 216, a negative electrode current collection terminal 232, and a negative electrode terminal 230 before an insertion process. At this time, the insert body 210 is inserted into a case main body 212 from a positive electrode tab 223 side as illustrated in FIG. 18. Even according to such a configuration, the electrode body holder 260 includes cuts 280 described in the first embodiment, so that it is possible to suppress production of wrinkles, bends, and the like at a portion of the electrode body holder 260 covering the electrode body 220 in the insertion process.

As described above, specific aspects of the technique disclosed herein include aspects described in each following paragraph.
Paragraph 1: An electricity storage device includes: a case main body of a rectangular tubular shape whose both ends are opened and whose cross section is rectangular; a first lid that is attached to a first opening of the case main body; a second lid that is attached to a second opening of the case main body; an electrode body that is housed in the case main body; a first spacer that is disposed between the first lid and the electrode body in the case main body; a second spacer that is disposed between the second lid and the electrode body in the case main body; and an electrode body holder that covers the electrode body along an inner side surface of the case main body, wherein the case main body includes a pair of opposing wide side surfaces and a pair of opposing narrow side surfaces, lengths of the first spacer and the second spacer in a direction in which the pair of wide side surfaces oppose each other are shorter than a length of the electrode body in the direction in which the pair of wide side surfaces oppose each other, the electrode body holder protrudes from the electrode body in a length direction of the case main body, and covers at least part of an outer side surface of the first spacer and at least part of an outer side surface of the second spacer, and is adhered to each of the first spacer and the second spacer on a side surface opposing to the pair of wide side surfaces of the case main body, and the electrode body holder includes a cut on an outer side of a portion covering the electrode body.
Paragraph 2: In the electricity storage device described in paragraph 1, the cut includes at least one of a first cut that is located between the electrode body, and a portion, to which the first spacer is adhered, on the side surface of the electrode body holder opposing to the pair of wide side surfaces in the length direction of the case main body, and a second cut that is located between the electrode body and a portion, to which the second spacer is adhered, on the side surface of the electrode body holder opposing to the pair of wide side surfaces in the length direction of the case main body.
Paragraph 3: In the electricity storage device described in paragraph 2, the cut includes the first cut and the second cut.
Paragraph 4: In the electricity storage device described in paragraph 2 or 3, the electrode body includes an electrode tab formed at an edge in the length direction of the case main body, and the first cut and the second cut are disposed at positions at which the first cut and the second cut do not overlap the electrode tab in a direction in which the pair of narrow side surfaces oppose each other.
Paragraph 5: In the electricity storage device described in any one of paragraph 2 to paragraph 4, in a direction in which the pair of narrow side surfaces oppose each other, a length of the first cut is longer than a length of the portion of the electrode body holder to which the first spacer is adhered, and a length of the second cut is longer than the portion of the electrode body holder to which the second spacer is adhered.
Paragraph 6: In the electricity storage device described in any one of paragraph 2 to paragraph 5, the electrode body holder is adhered to each of the first spacer and the second spacer on a side surface opposing to the pair of narrow side surfaces of the case main body, and the cut includes a third cut that is located between the electrode body and a third adhesion part, to which the first spacer is adhered, on the side surface of the electrode body holder opposing to the pair of narrow side surfaces in the length direction of the case main body, and a fourth cut that is located between the electrode body and a fourth adhesion part, to which the second spacer is adhered, on the side surface of the electrode body holder opposing to the pair of narrow side surfaces in the length direction of the case main body.
Paragraph 7: In the electricity storage device described in paragraph 6, the cut includes the third cut and the fourth cut.
Paragraph 8: In the electricity storage device described in paragraph 6 or paragraph 7, in the direction in which the pair of wide side surfaces oppose each other, a length of the third cut is longer than the third adhesion part, and a length of the fourth cut is longer than the fourth adhesion part.
Paragraph 9: An method for manufacturing an electricity storage device including: a case main body of a rectangular tubular shape whose both ends are opened and whose cross section is rectangular; a first lid that is attached to a first opening of the case main body; a second lid that is attached to a second opening of the case main body; an electrode body that is housed in the case main body; a first spacer that is disposed between the first lid and the electrode body in the case main body; a second spacer that is disposed between the second lid and the electrode body in the case main body; and an electrode body holder that covers the electrode body along an inner side surface of the case main body, the method including: a step of preparing the case main body; a step of preparing an insert body formed by combining the electrode body, the first spacer, the second spacer, and the electrode body holder; and a step of inserting the insert body into the case main body through an opening of the case main body, wherein, in the insert body prepared here, the electrode body holder covers the electrode body with the first spacer and the second spacer disposed on both sides, and protrudes from the electrode body and is adhered to each of the first spacer and the second spacer on the both sides of the electrode body, and the electrode body holder includes a cut on an outer side of a portion covering the electrode body.
Paragraph 10: In the method for manufacturing the electricity storage device described in paragraph 9, the case main body prepared in the preparing step includes a pair of opposing wide side surfaces, and a pair of opposing narrow side surfaces, the step of preparing the insert body includes a first adhesion step of adhering the electrode body holder to a side surface of the first spacer on which the pair of wide side surfaces oppose each other, and a second adhesion step of adhering the electrode body holder to a side surface of the second spacer on which the pair of wide side surfaces oppose each other, and the cut includes at least one of a first cut that is located between the electrode body and a position at which the adhesion is performed in the first adhesion step in a length direction of the case main body, and a second cut that is located between the electrode body and a position at which the adhesion is performed in the second adhesion step.
Paragraph 11: In the method for manufacturing the electricity storage device described in paragraph 10, the cut includes the first cut and the second cut.
Paragraph 12: In the method for manufacturing the electricity storage device described in paragraph 10 or paragraph 11, in the insert body prepared in the step of preparing the insert body, the electrode body includes an electrode tab formed at an edge in the length direction of the case main body, and the first cut and the second cut are disposed at positions at which the first cut and the second cut do not overlap the electrode tab in a direction in which the pair of narrow side surfaces oppose each other.
Paragraph 13: In the method for manufacturing the electricity storage device described in any one of paragraph 10 to paragraph 12, in the insert body prepared in the step of preparing the insert body, and in the direction in which the pair of narrow side surfaces oppose each other, a length of the first cut is longer than a portion adhered in the first adhesion step, and a length of the second cut is longer than a length of a portion adhered in the second adhesion step.
Paragraph 14: In the method for manufacturing the electricity storage device described in any one of paragraph 10 to paragraph 13, the step of preparing the insert body includes a third adhesion step of adhering the electrode body holder to a side surface of the first spacer on which the pair of narrow side surfaces oppose each other, and a fourth adhesion step of adhering the electrode body holder to a side surface of the second spacer on which the pair of narrow side surfaces oppose each other, and the cut includes at least one of a third cut that is located between the electrode body and a position at which the adhesion is performed in the third adhesion step in the length direction of the case main body, and a fourth cut that is located between the electrode body and a position at which the adhesion is performed in the fourth adhesion step.
Paragraph 15: In the method for manufacturing the electricity storage device described in paragraph 14, the cut includes the third cut and the fourth cut.
Paragraph 16: In the method for manufacturing the electricity storage device described in paragraph 14 or paragraph 15, in a direction in which the pair of wide side surfaces oppose each other, a length of the third cut is longer than a portion adhered in the third adhesion step, and a length of the fourth cut is longer than a portion adhered in the fourth adhesion step.

## Claims

1. An electricity storage device (100) comprising:
a case main body (12) having a rectangular tubular shape with a rectangular cross section and open ends;
a first lid (14) attached to a first opening (12h1) of the case main body (12);
a second lid (16) attached to a second opening (12h2) of the case main body (12);
an electrode body (20) housed in the case main body (12);
a first spacer (50A) disposed between the first lid (14) and the electrode body (20) within the case main body (12);
a second spacer (50B) disposed between the second lid (16) and the electrode body (20) within the case main body (12); and
an electrode body (20) holder covering the electrode body (20) along an inner side surface of the case main body (12), wherein
the case main body (12) includes
a pair of opposing wide side surfaces (12a, 12b), and
a pair of opposing narrow side surfaces (12c,12d),
lengths of the first spacer (50A) and the second spacer (50B) in a direction in which the pair of wide side surfaces (12a, 12b) oppose each other are shorter than a length of the electrode body (20) in the direction in which the pair of wide side surfaces (12a, 12b) oppose each other,
the electrode body holder (60) protrudes from the electrode body (20) in a length direction of the case main body (12), covers at least part of an outer side surface of the first spacer (50A) and at least part of an outer side surface of the second spacer (50B), and is adhered to each of the first spacer (50A) and the second spacer (50B) on a side surface opposing the pair of wide side surfaces (12a, 12b) of the case main body (12), and
the electrode body holder (60) includes a cut (80) on an outer side of a portion covering the electrode body (20).

2. The electricity storage device (100) according to claim 1, wherein the cut (80) includes at least one of a first cut (80a) located between the electrode body (20) and a portion, to which the first spacer (50A) is adhered, on the side surface of the electrode body holder (60) opposing to the pair of wide side surfaces (12a, 12b) in the length direction of the case main body (12), and a second cut (80b) located between the electrode body (20) and a portion, to which the second spacer (50B) is adhered, on the side surface of the electrode body (20) holder opposing to the pair of wide side surfaces (12a, 12b) in the length direction of the case main body (12).

3. The electricity storage device (100) according to claim 2, wherein the cut includes the first cut (80a) and the second cut (80b).

4. The electricity storage device (100) according to claim 2 or 3, wherein
the electrode body (20) includes an electrode tab formed at an edge in the length direction of the case main body (12), and
the first cut (80a) and the second cut (80b) are disposed at positions at which the first cut (80a) and the second cut (80b) do not overlap the electrode tab in a direction in which the pair of narrow side surfaces (12c,12d) oppose each other.

5. The electricity storage device (100) according to any one of claims 2 to 4, wherein, in a direction in which the pair of narrow side surfaces (12c,12d) oppose each other, a length of the first cut (80a) is longer than a length of the portion of the electrode body (20) holder to which the first spacer (50A) is adhered, and a length of the second cut (80b) is longer than the portion of the electrode body (20) holder to which the second spacer (50B) is adhered.

6. The electricity storage device (100) according to any one of claims 2 to 5, wherein
the electrode body (20) holder is adhered to each of the first spacer (50A) and the second spacer (50B) on a side surface opposing to the pair of narrow side surfaces (12c,12d) of the case main body (12), and
the cut includes at least one of a third cut (80c) located between the electrode body (20) and a third adhesion part (70c), to which the first spacer (50A) is adhered, on the side surface of the electrode body (20) holder opposing to the pair of narrow side surfaces (12c,12d) in the length direction of the case main body (12), and a fourth cut (80d) located between the electrode body (20) and a fourth adhesion part (70d), to which the second spacer (50B) is adhered, on the side surface of the electrode body (20) holder opposing to the pair of narrow side surfaces (12c,12d) in the length direction of the case main body (12).

7. The electricity storage device (100) according to claim 6, wherein the cut includes the third cut (80c) and the fourth cut (80d).

8. The electricity storage device (100) according to claim 6 or 7, wherein, in the direction in which the pair of wide side surfaces (12a,12b) oppose each other, a length of the third cut (80c) is longer than the third adhesion part (70c), and a length of the fourth cut (80d) is longer than the fourth adhesion part (70d).

9. A method for manufacturing an electricity storage device (100) comprising:
a case main body (12) having a rectangular tubular shape with a rectangular cross section and open ends;
a first lid attached to a first opening (12h1) of the case main body (12);
a second lid attached to a second opening (12h2) of the case main body (12);
an electrode body (20) that is housed in the case main body (12);
a first spacer (50A) that is disposed between the first lid and the electrode body (20) within the case main body (12);
a second spacer (50B) disposed between the second lid and the electrode body (20) within the case main body (12); and
an electrode body (20) holder covering the electrode body (20) along an inner side surface of the case main body (12), the method comprising:
a step of preparing the case main body (12);
a step of preparing an insert body (110) formed by combining the electrode body (20), the first spacer (50A), the second spacer (50B), and the electrode body (20) holder; and
a step of inserting the insert body (110) into the case main body (12) through an opening of the case main body (12),
wherein, in the insert body (110) prepared here,
the electrode body holder (60) covers the electrode body (20) with the first spacer (50A) and the second spacer (50B) disposed on both sides, and protrudes from the electrode body (20) and is adhered to each of the first spacer (50A) and the second spacer (50B) on the both sides of the electrode body (20), and
the electrode body holder (60) includes a cut (80) on an outer side of a portion covering the electrode body (20).

10. The method for manufacturing the electricity storage device (100) according to claim 9, wherein
the case main body (12) prepared in the preparing step includes
a pair of opposing wide side surfaces (12a, 12b), and
a pair of opposing narrow side surfaces (12c,12d),
the step of preparing the insert body (110) includes
a first adhesion step of adhering the electrode body holder (60) to a side surface of the first spacer (50A) on which the pair of wide side surfaces (12a, 12b) oppose each other, and
a second adhesion step of adhering the electrode body holder (60) to a side surface of the second spacer (50B) on which the pair of wide side surfaces (12a, 12b) oppose each other, and
the cut (80) includes at least one of a first cut (80a) located between the electrode body (20) and a position at which the adhesion is performed in the first adhesion step in a length direction of the case main body (12), and a second cut (80b) located between the electrode body (20) and a position at which the adhesion is performed in the second adhesion step.

11. The method for manufacturing the electricity storage device (100) according to claim 10, wherein the cut includes the first cut (80a) and the second cut (80b).

12. The method for manufacturing the electricity storage device (100) according to claim 10 or 11, wherein
in the insert body (110) prepared in the step of preparing the insert body (110),
the electrode body (20) includes an electrode tab formed at an edge in the length direction of the case main body (12), and
the first cut (80a) and the second cut (80b) are disposed at positions at which the first cut (80a) and the second cut (80b) do not overlap the electrode tab in a direction in which the pair of narrow side surfaces (12c,12d) oppose each other.

13. The method for manufacturing the electricity storage device (100) according to any one of claims 10 to 12, wherein, in the insert body (110) prepared in the step of preparing the insert body (110),
in the direction in which the pair of narrow side surfaces (12c,12d) oppose each other, a length of the first cut (80a) is longer than a portion adhered in the first adhesion step, and a length of the second cut (80b) is longer than a length of a portion adhered in the second adhesion step.

14. The method for manufacturing the electricity storage device (100) according to any one of claims 10 to 13, wherein
the step of preparing the insert body (110) includes
a third adhesion step of adhering the electrode body holder (60) to a side surface of the first spacer (50A) on which the pair of narrow side surfaces (12c,12d) oppose each other, and
a fourth adhesion step of adhering the electrode body holder (60) to a side surface of the second spacer (50B) on which the pair of narrow side surfaces (12c,12d) oppose each other, and
the cut (80) includes at least one of a third cut (80c) located between the electrode body (20) and a position at which the adhesion is performed in the third adhesion step in the length direction of the case main body (12), and a fourth cut (80d) located between the electrode body (20) and a position at which the adhesion is performed in the fourth adhesion step.

15. The method for manufacturing the electricity storage device (100) according to claim 14, wherein the cut (80) includes the third cut (80c) and the fourth cut (80d).
